# EUROPEAN PATENT SPECIFICATION

(11) **EP 2 974 627 B1**
(45) Date of publication and mention of the grant of the patent: **20.06.2018**
(21) Application number: 15179676.0
(22) Date of filing: 13.12.2011
(51) Int. Cl.: A47J 19/02, A23N 1/02

(54) **APPARATUS FOR EXTRACTING JUICE AND PULP FROM FRUIT OR VEGETABLES**
VORRICHTUNG ZUR SAFT- UND FRUCHTFLEISCHAUSPRESSUNG AUS OBST ODER GEMÜSE
APPAREIL POUR EXTRAIRE DU JUS ET LA PULPE DE FRUITS OU DE LÉGUMES

(30) Priority: 13.12.2010 EP 10194779
(43) Date of publication of application: 20.01.2016
(62) Divisional of application: 11796693.7
(73) Proprietor: Novis AG, 1840 Luxembourg (LU)
(72) Inventor: Steiner, Wolfgang, 2572 Mörigen (CH)
(74) Representative: BOVARD AG

(56) References cited:
- EP-A1- 0 226 691
- WO-A1-89/06106
- DE-B- 1 098 171
- US-A- 2 660 211
- US-A- 3 623 523

## Description

The present invention relates to an apparatus for extracting juice and pulp from fruit or vegetables.

Such an apparatus is for example described in US 2,660,211, which comprises a stationary housing, a strainer, that is rotatable within the housing and has a perforated side wall, a grater, a feeding pipe for fruits or vegetables and an outflow spout. A motor unit drives the strainer. In operation the pulp is hurled outwardly by the centrifugal force against the wall of the strainer. The liquid contained in the vegetable material is thus forced out through the perforated wall, whereupon it is collected within the housing and caused to flow out through the spout. In a first embodiment the strainer has a cylindrical shape. A scraping member is manually swingable about a bold to scrape of pulp from the perforated side wall. Thus, pulp subjected to centrifugation may be scraped off by the scraping member, which conveys the pulp into an inner space of the apparatus. In a second embodiment the strainer has a conical perforated wall with a cylindrical upper portion. A scraper is arranged in an opening of the strainer. The resiliency of the scraper is such as to counteract an outwardly directed force acting upon the scraper. The scraper is operated manually by a stop screw, which is used to adjust the scraper to varying distances from the upper cylindrical portion on the strainer. For both embodiments the scrapers are actuated manually, which may be subject of maloperation. Also the operation of the apparatus has to be supervised.

WO 89/06106 describes an apparatus for extracting juice and pulp from vegetables and fruits, which comprises a base having an electric motor and a bowl removably attached to the base. The drive shaft of the motor projects into the interior of the bowl for receiving a strainer and i.a. a fruit squeezer. The strainer has a spindle which is fitted to the drive shaft in two orientations, one in which the strainer remains static during operation and the other in which the strainer is driven rotationally, when the drive shaft is itself turning and the provided fruit squeezer as well.

It is an object of the present invention to enhance the yield in the extraction of juice and pulp from fruit or vegetables.

According to an embodiment of the invention a first apparatus is provided for extracting juice and pulp from citrus fruit, comprising:
a receptacle;
a strainer, preferably having a cylindrical shape, located within said receptacle and rotatable about a strainer axis, said strainer having a bottom and a perforated side wall;
a citrus mill rotatable about a citrus mill axis, said citrus mill having a citrus mill dome provided with protrusions, preferably ribs, at its outer surface;
a motor unit for rotating said strainer about said strainer axis and for rotating said citrus mill about said citrus mill axis;
an outlet for collecting juice and pulp from said receptacle,
characterized in that
said citrus mill is located within said strainer;
said strainer is rotatably driven via a strainer power train operatively connected between said motor unit and said strainer;
said citrus mill is rotatably driven via a citrus mill power train operatively connected between said motor unit and said citrus mill.

According to an example of a modification of the apparatus of an embodiment of the invention, a second apparatus is provided for extracting juice and pulp from fruit or vegetables in order to obtain a flowable mass, such as juice or puree, comprising:
a receptacle;
a cylindrical strainer located within said receptacle and rotatable about its axis of symmetry, said cylindrical strainer having a bottom and a perforated side wall;
a motor unit for rotating said cylindrical strainer about its axis of symmetry;
an inlet unit for introducing fruit or vegetables into said strainer;
an outlet unit for collecting flowable mass from said receptacle,
characterized in that the apparatus further comprises
a flexible element located within said strainer and urged against the inside surface of said perforated side wall.

The first apparatus and the second apparatus can be transformed into each other by exchanging their respective extraction units.

The extraction unit of the first apparatus includes
the strainer located within the receptacle and rotatable about the strainer axis by the motor unit, said strainer having a bottom and a perforated side wall;
the citrus mill rotatable about the citrus mill axis by the motor unit, said citrus mill having a citrus mill dome provided with protrusions, preferably ribs, at its outer surface; wherein
said citrus mill is located within said strainer;
said strainer is rotatably driven via a strainer power train operatively connected between the motor unit and the strainer;
said citrus mill is rotatably driven via a citrus mill power train operatively connected between the motor unit and the citrus mill.

The extraction unit of the second apparatus includes
the cylindrical strainer located within the receptacle and rotatable about its axis of symmetry by the motor unit, said cylindrical strainer having a bottom and a perforated side wall; wherein
the flexible element located within the strainer and urged against the inside surface of the perforated side wall.

Other objects, advantages, features and applications of the invention(s) will become more apparent from the following detailed description of a preferred embodiment and of an example, given as examples not to be construed as limiting the scope of the invention(s), when taken in conjunction with the accompanying drawings.

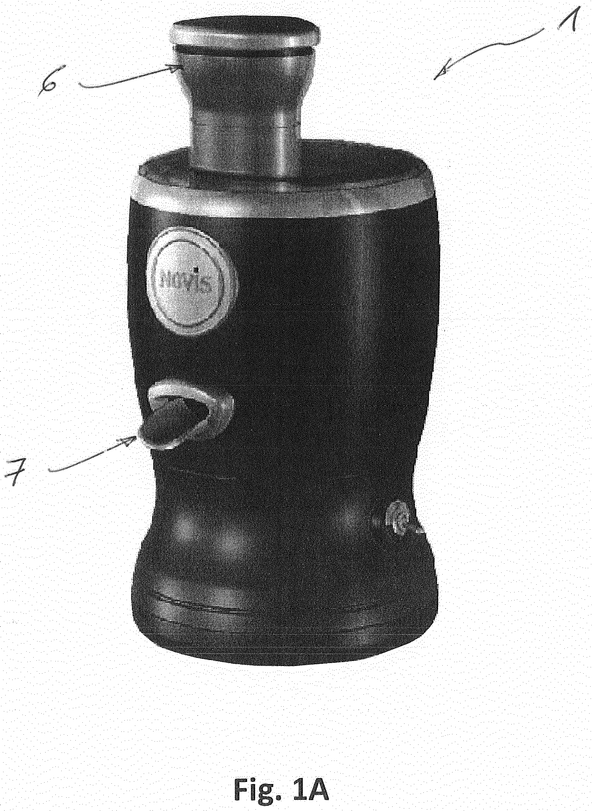

Fig. 1A is a schematic perspective view of the apparatus according to the an example of the invention;

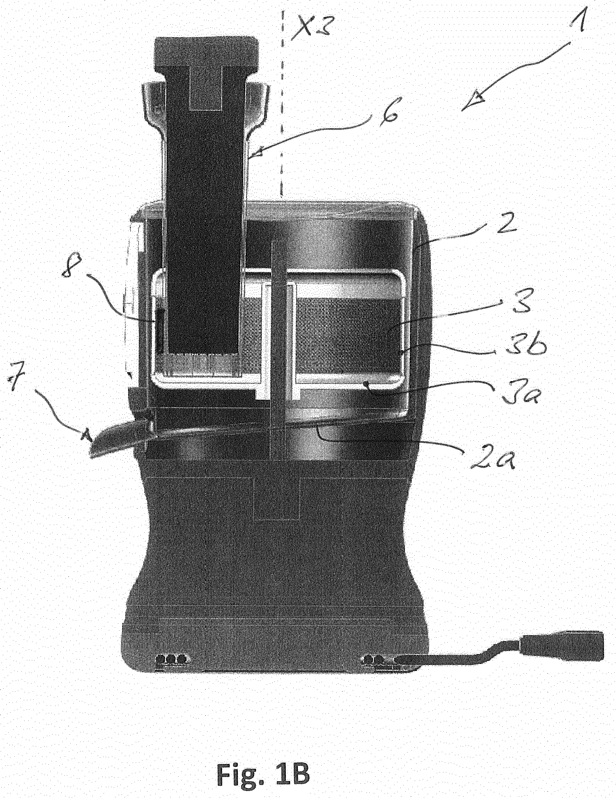

Fig. 1B is a schematic cross-sectional view of a vertical sectional plane of the apparatus of Fig. 1A;
Fig. 2A is a schematic perspective view of the apparatus according to an embodiment of the invention;
Fig. 2B is a schematic cross-sectional view of a vertical sectional plane of the apparatus of Fig. 2A;

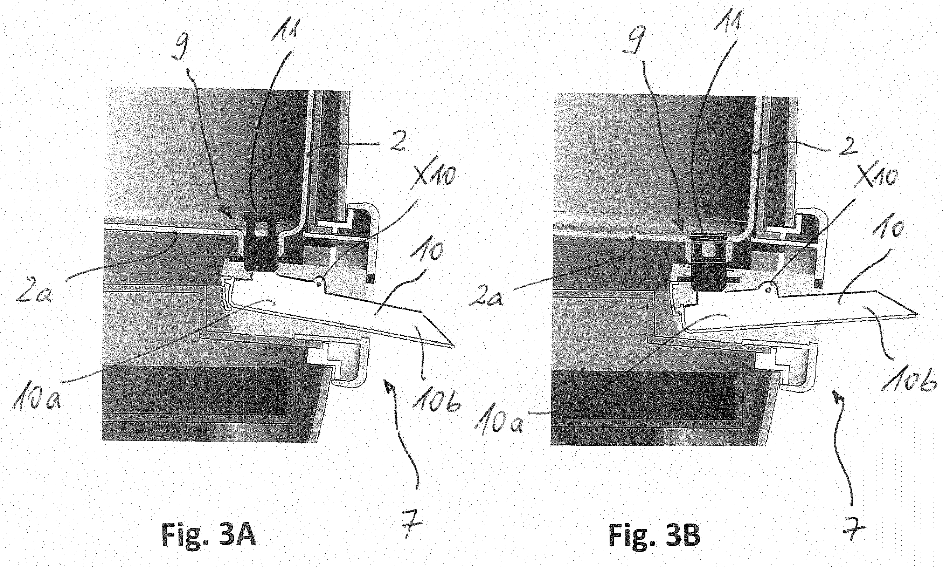

Fig. 3A is a schematic partial cross-sectional view of a vertical sectional plane of the apparatus showing a detail in a first state;
Fig. 3B is a schematic partial cross-sectional view of a vertical sectional plane of the apparatus showing said detail in a second state;
Fig. 4A is a detailed cross-sectional view of a vertical sectional plane of the apparatus according to an example of the invention;
Fig. 4B is a detailed cross-sectional view of a vertical sectional plane of the apparatus according to an embodiment of the invention;

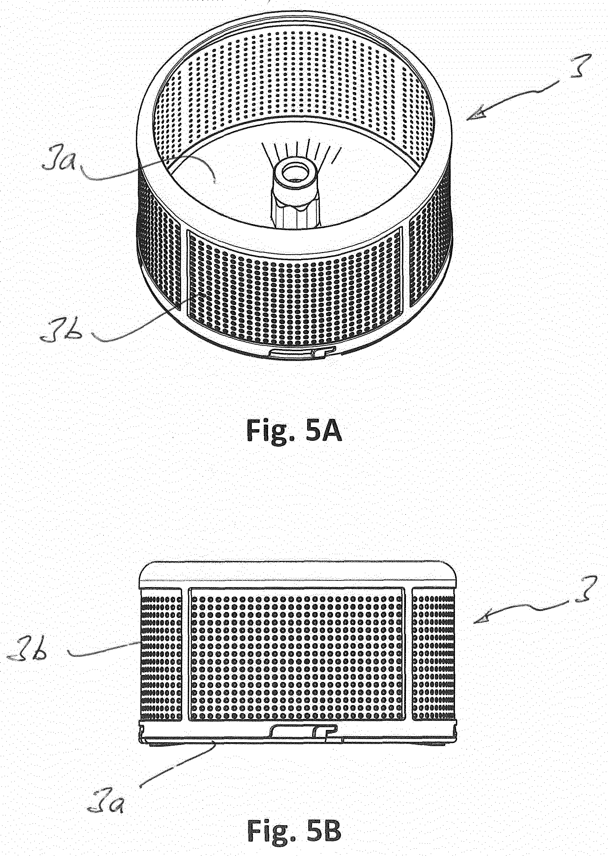

Fig. 5A is a perspective view of an assembled component (strainer) of the apparatus according to both an embodiment and an example of the invention;
Fig. 5B is a lateral view of the assembled component of the apparatus according to both an embodiment and an example of the inventions;

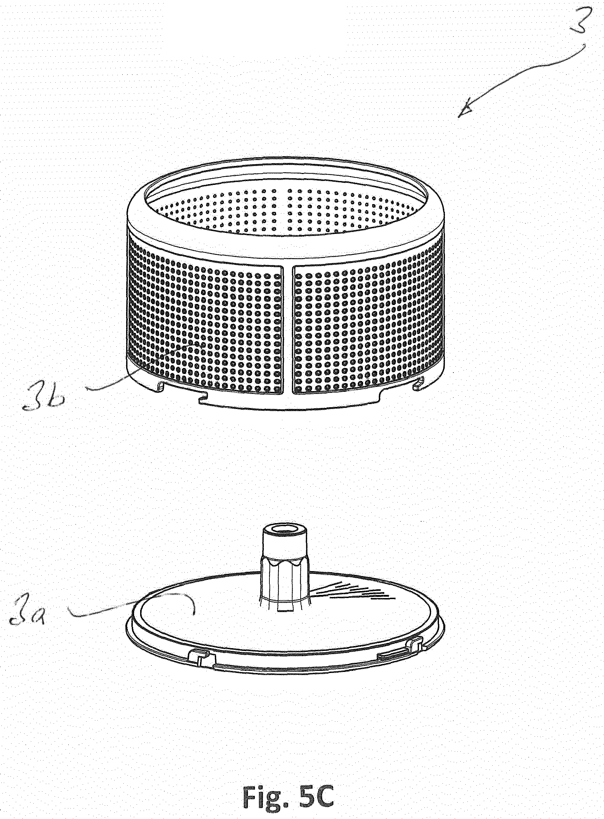

Fig. 5C is a perspective view of the disassembled component of the apparatus according to both an embodiment and an example of the invention.

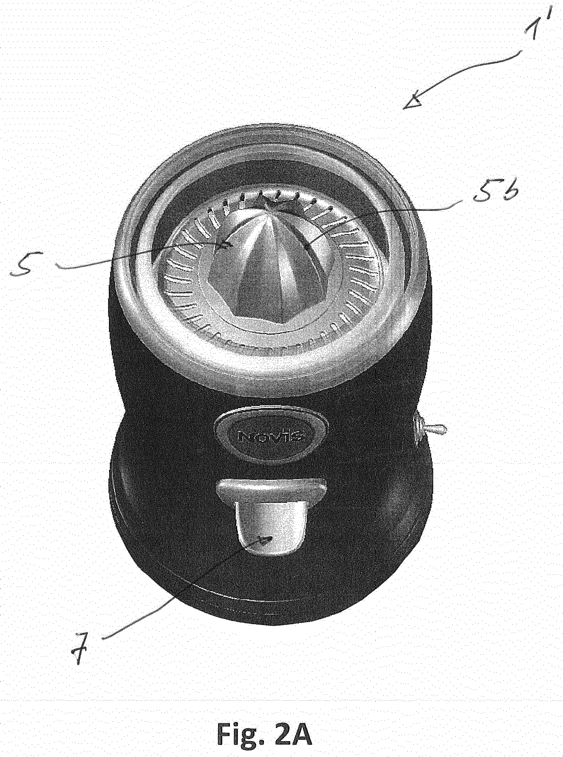

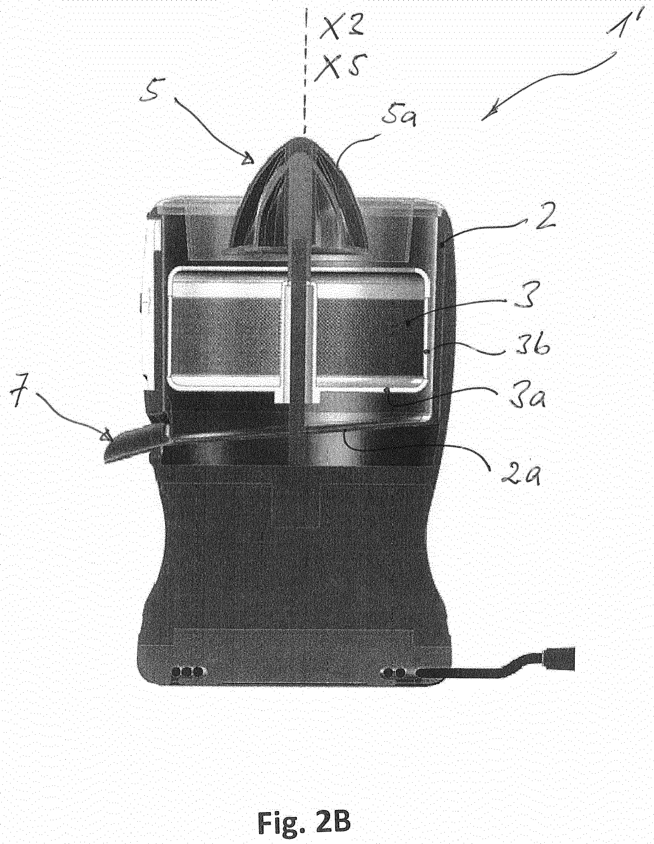

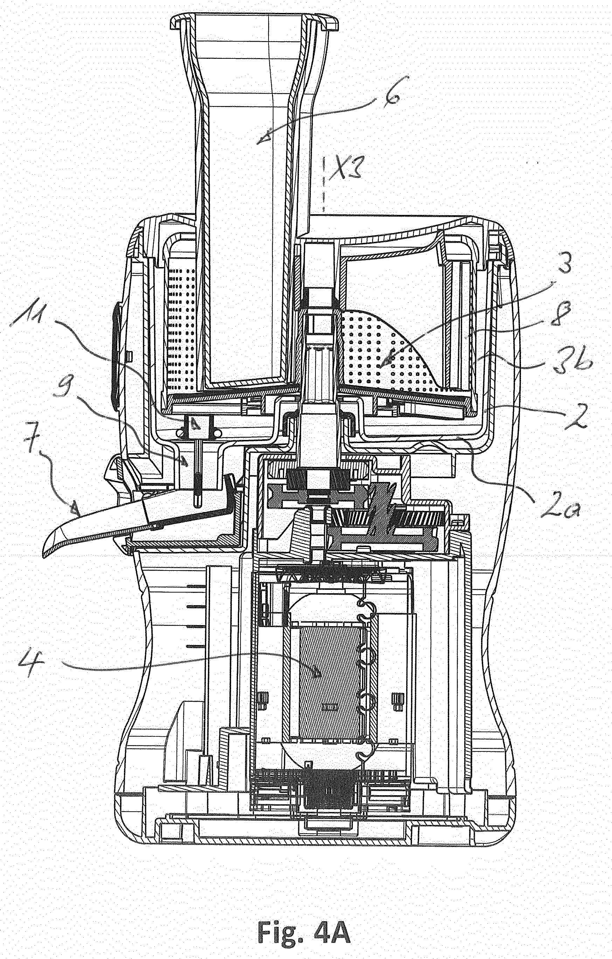

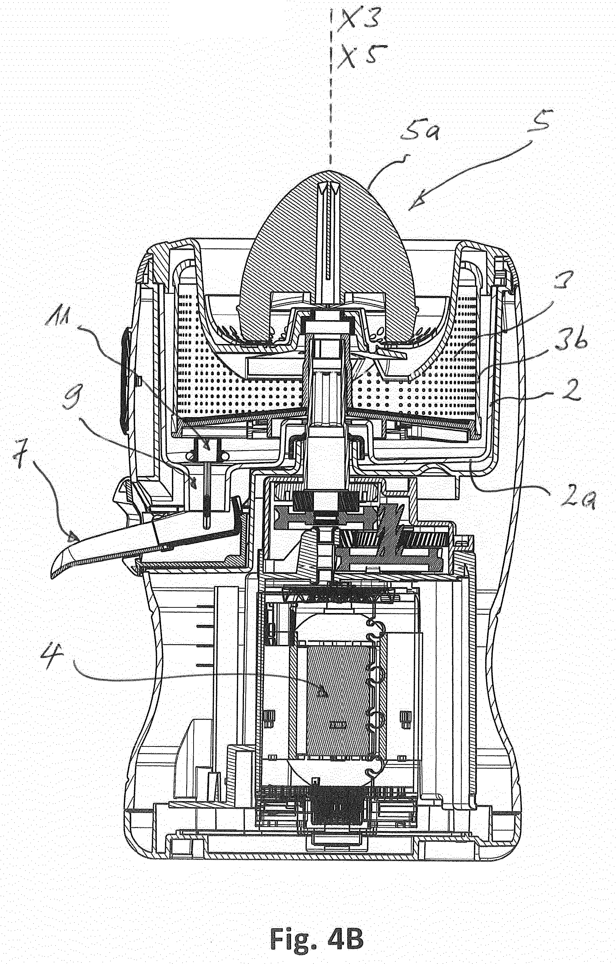

A first apparatus 1' according to the invention for extracting juice and pulp from citrus fruit, comprises, as can be seen on Fig. 2A-2B and Fig. 4B, a receptacle 2; a strainer 3, preferably having a cylindrical shape, located within said receptacle 2 and rotatable about a strainer axis X3, said strainer 3 having a bottom 3a and a perforated side wall 3b; a citrus mill 5 rotatable about a citrus mill axis X5, said citrus mill 5 having a citrus mill dome 5a provided with protrusions 5b, preferably ribs, at its outer surface; a motor unit 4 for rotating said strainer 3 about said strainer axis X3 and for rotating said citrus mill 5 about said citrus mill axis X5; an outlet unit 7 for collecting juice and pulp from said receptacle 2. In particular, said citrus mill 5 is located within said strainer 3; said strainer 3 is rotatably driven via a strainer power train operatively connected between said motor unit 4 and said strainer 3; said citrus mill 5 is rotatably driven via a citrus mill power train operatively connected between said motor unit 4 and said citrus mill 5.

According to the invention, said strainer power train has a strainer transmission ratio SR, defined as strainer rpm divided by motor rpm, and said citrus mill power train has a citrus mill transmission ratio CR, defined as citrus mill rpm divided by motor rpm, and wherein the ratio SR/CR between said strainer transmission ratio SR and said citrus mill transmission ratio CR is comprised within 5/1 and 30/1, preferably between 10/1 and 20/1.

Optionally, said strainer has a strainer inner diameter Ri comprised between 10cm and 30cm, preferably between 15cm and 20cm.

Also optionally, said strainer is preferably operated at a rotational speed comprised between 1000rpm and 2000rpm.

In a further variant, the hole diameter of the perforations of said perforated side wall is comprised between 0.5mm and 2mm, preferably between 0.8mm and 1.5mm.

The apparatus can further comprise a drive shaft operatively connected to said motor unit via said strainer power train and having a drive shaft formation, wherein the bottom of said strainer comprises a bottom formation complementary to said drive shaft formation, for receiving said drive shaft formation in a rotationally fixed manner, and wherein said drive shaft and said bottom can be removably fitted together.

Also, said strainer can comprise a bottom part and a perforated side wall part which can be removably fitted together.

Optionally, both said bottom part and said perforated side wall part are made of a polymer material; or said perforated side wall part comprises a perforated sheet made of stainless steel permanently fixed in a frame made of a polymer material; or said perforated side wall part is made of stainless steel; and said polymer material is preferably a thermoplastic material.

A second apparatus according to the present invention further comprises an inlet unit 6 for introducing fruit or vegetables into said strainer 3 and a flexible element 8 located within said strainer 3 and urged against the inside surface of said perforated side wall 3b.

Optionally, said flexible element and the inside surface of the perforated wall are in contact with each other along a line of contact.

Also, a surface of the flexible element can face the inside surface of the perforated wall and forms a wedge-shaped space with it which narrows towards said line of contact.

In a variant, said flexible element is a lip-shaped element.

In another variant, said line of contact between the flexible element and the inside surface of the perforated wall extends in parallel to the axis of symmetry of said cylindrical strainer.

Optionally, said flexible element is a cylindrical element, preferably having an outer diameter R2 comprised between 1/10 and 1/2 the inner diameter R1 of the cylindrical strainer.

Also optionally, the cylindrical element is a cylindrical roller rotatably supported along an axis extending in parallel to the axis of symmetry of said cylindrical strainer.

In another variant, said flexible element consists of or comprises an elastomeric material, preferably a thermoplastic elastomer.

Optionally, said flexible element comprises a hard core material, preferably a metal or a thermoplastic material, and a soft cover material, preferably an elastomeric material or a thermoplastic elastomer, fitted thereon.

In a further variant, a first portion of said flexible element is secured to a rigid support element extending within said strainer towards the inside surface of said perforated side wall, and a second portion of said flexible element is urged against the inside surface of said perforated side wall.

Optionally, at least said second portion of the flexible element is a soft material, preferably an elastomeric material or a thermoplastic elastomer.

In another variant, the rigid support comprises a support formation and the first portion of said flexible element comprises a flexible element formation complementary to said support formation, for receiving said flexible element formation in said support formation in a form-locking and/or force-locking manner.

Also, the apparatus can further comprise a drive shaft operatively connected to said motor unit and having a drive shaft formation, wherein the bottom of said cylindrical strainer comprises a bottom formation complementary to said drive shaft formation, for receiving said drive shaft formation in a rotationally fixed manner, and wherein said drive shaft and said bottom can be removably fitted together.

Optionally, said cylindrical strainer comprises a bottom part and a perforated side wall part which can be removably fitted together.

Optionally, both said bottom part and said perforated side wall part are made of a polymer material; or said perforated side wall part comprises a perforated sheet made of stainless steel permanently fixed in a frame made of a polymer material; or said perforated side wall part is made of stainless steel; and said polymer material is preferably a thermoplastic material.

## Claims

1. An apparatus (1') for extracting juice and pulp from citrus fruit, comprising:
a receptacle (2);
a strainer (3), preferably having a cylindrical shape, located within said receptacle (2) and rotatable about a strainer axis (X3), said strainer (3) having a bottom (3a) and a perforated side wall (3b);
a citrus mill (5) rotatable about a citrus mill axis (X5), said citrus mill (5) having a citrus mill dome (5a) provided with protrusions (5b), preferably ribs, at its outer surface;
a motor unit (4) for rotating said strainer (3) about said strainer axis (X3) and for rotating said citrus mill (5) about said citrus mill axis (X5);
an outlet unit (7) for collecting juice and pulp from said receptacle (2),
said citrus mill (5) is located within said strainer (3)
**characterized in that**
said strainer (3) is rotatably driven via a strainer power train operatively connected between said motor unit (4) and said strainer (3);
said citrus mill (5) is rotatably driven via a citrus mill power train operatively connected between said motor unit (4) and said citrus mill (5), wherein said strainer power train has a strainer transmission ratio SR, defined as strainer rpm divided by motor rpm, and said citrus mill power train has a citrus mill transmission ratio CR, defined as citrus mill rpm divided by motor rpm, and
wherein the ratio SR/CR between said strainer transmission ratio SR and said citrus mill transmission ratio CR is comprised within 5/1 and 30/1.

2. The apparatus according to claim 1, wherein the ratio SR/CR between said strainer transmission ratio SR and said citrus mill transmission ratio CR is comprised between 10/1 and 20/1.

3. The apparatus according to claims 1 or 2, wherein said strainer has a strainer inner diameter Ri comprised between 10cm and 30cm, preferably between 15cm and 20cm.

4. The apparatus according to claim 3, wherein said strainer is preferably operated at a rotational speed comprised between 1000rpm and 2000rpm.

5. The apparatus according to any one of claims 1 to 4, wherein the hole diameter of the perforations of said perforated side wall is comprised between 0.5mm and 2mm, preferably between 0.8mm and 1.5mm.

6. The apparatus according to any one of claims 1 to 5, further comprising a drive shaft operatively connected to said motor unit via said strainer power train and having a drive shaft formation, wherein the bottom of said strainer comprises a bottom formation complementary to said drive shaft formation, for receiving said drive shaft formation in a rotationally fixed manner, and wherein said drive shaft and said bottom can be removably fitted together.

7. The apparatus according to any one of claims 1 to 6, wherein said strainer comprises a bottom part and a perforated side wall part which can be removably fitted together.

8. The apparatus according to claim 7, wherein both said bottom part and said perforated side wall part are made of a polymer material; or wherein said perforated side wall part comprises a perforated sheet made of stainless steel permanently fixed in a frame made of a polymer material; or wherein said perforated side wall part is made of stainless steel; and wherein said polymer material is preferably a thermoplastic material.

## Patentansprüche

1. Vorrichtung (1') zum Auspressen von Saft und Fruchtfleisch aus Zitrusfrüchten, umfassend:
- eine Aufnahme (2);
- einen Filter (3), welcher vorzugsweise eine zylindrische Form aufweist, angeordnet in der Aufnahme (2) und drehbar um eine Filterachse (X3), wobei der Filter (3) einen Boden (3a) und eine perforierte Seitenwand (3b) hat;
- eine Zitrusfrucht-Presse (5), welche um eine Zitrusfrucht-Pressenachse (X5) drehbar ist, wobei die Zitrusfrucht-Presse (5) einen Zitrusfrucht-Pressdom (5a) mit Vorsprüngen (5b), vorzugsweise Rippen, an seiner Aussenfläche aufweist;
- eine Antriebseinheit (4), um den Filter (3) um die Filterachse (X3) und die Zitrusfrucht-Presse (5) um die Zitrusfrucht-Pressenachse (X5) zu drehen;
- eine Auslasseinheit (7), um Saft und Fruchtfleisch aus der Aufnahme (2) zu sammeln,
wobei die Zitrusfrucht-Presse (5) innerhalb des Filters (3) angeordnet ist; **dadurch gekennzeichnet, dass**
- der Filter (3) mittels eines Filter-Antriebsstrangs drehbar angetrieben ist, welcher zwischen der Antriebseinheit (4) und dem Filter (3) wirkend verbunden ist ;
- die Zitrusfrucht-Presse (5) mittels eines Zitrusfrucht-Presseantriebsstrangs drehbar angetrieben ist, welcher zwischen der Antriebseinheit (4) und der Zitrusfrucht-Presse (5) wirkend verbunden ist, wobei der Filter-Antriebsstrang ein Filter-Übersetzungsverhältnis SR hat, welches definiert ist als Filter-Drehzahl (U/min) dividiert durch Motordrehzahl (U/min), und der Zitrusfrucht-Presseantriebsstrang hat ein Zitrusfrucht-Presseübersetzungsverhältnis CR, welches definiert ist als Zitrusfrucht-Pressedrehzahl (U/min) dividiert durch Motordrehzahl (U/min), und wobei das Verhältnis SR/CR zwischen dem Filter-Übersetzungsverhältnis SR und dem Zitrusfrucht-Presseübersetzungsverhältnis CR zwischen 5/1 und 30/1 liegt.

2. Vorrichtung nach Anspruch 1, wobei das Verhältnis SR/CR zwischen dem Filter-Übersetzungsverhältnis SR und dem Zitrusfrucht-Presseübersetzungsverhältnis CR zwischen 10/1 und 20/1 liegt.

3. Vorrichtung nach Ansprüchen 1 oder 2, wobei der Filter einen Filterinnendurchmesser Ri hat, welcher zwischen 10cm und 30cm liegt, vorzugsweise zwischen 15cm und 20cm.

4. Vorrichtung nach Anspruch 3, wobei der Filter vorzugsweise mit einer Drehgeschwindigkeit angetrieben ist die zwischen 1000 U/min und 2000 U/min liegt.

5. Vorrichtung nach einem der Ansprüche 1 bis 4, wobei der Lochdurchmesser der Perforationen der perforierten Seitenwand zwischen 0,5mm und 2mm liegt, vorzugsweise zwischen 0,8mm und 1,5mm.

6. Vorrichtung nach einem der Ansprüche 1 bis 5, ferner umfassend eine Antriebswelle, welche mit der Antriebseinheit via dem Filter-Antriebsstrang wirkend verbunden ist und eine Antriebswellen-Formgebung aufweist, wobei der Boden des Filters eine zu der Antriebswellen-Formgebung komplementäre Bodenformgebung aufweist, um die Antriebswellen-Formgebung in einer drehfesten Weise aufzunehmen, und wobei die Antriebswelle und der Boden lösbar miteinander verbindbar sind.

7. Vorrichtung nach einem der Ansprüche 1 bis 6, wobei der Filter ein Bodenteil und ein perforiertes Seitenwandteil umfasst, welche lösbar miteinander verbindbar sind.

8. Vorrichtung nach Anspruch 7, wobei sowohl das Bodenteil als auch das perforierte Seitenwandteil aus einem Polymermaterial gefertigt ist; oder wobei das perforierte Seitenwandteil eine perforierte Platte umfasst, gefertigt aus Edelstahl, welche dauerhaft in einem Rahmen, gefertigt aus einem Polymermaterial, befestigt ist; oder wobei das perforierte Seitenwandteil aus Edelstahl gefertigt ist; und wobei das Polymermaterial vorzugsweise ein thermoplastisches Material ist

## Revendications

1. Appareil (1') pour extraire du jus et la pulpe d'un agrume, comprenant:
- un récipient (2);
- un filtre (3), ayant de préférence une forme cylindrique, situé dans ledit récipient (2) et qui tourne autour d'un axe de filtre (X3), ledit filtre (3) possédant un fond (3a) et une paroi latérale perforée (3b);
- un presse-agrumes (5) qui tourne autour d'un axe de presse-agrumes (X5), ledit presse-agrumes (5) ayant un cône de pressage (5a) pourvu de portions saillantes (5b), de préférence des nervures, sur sa surface externe;
- une unité motrice (4) pour faire tourner ladite filtre (3) autour dudit axe de filtre (X3), et pour faire tourner ledit presse-agrumes (5) autour dudit axe de presse-agrumes (X5);
- une unité de sortie (7) pour collecter le jus et la pulpe dudit récipient (2),
ledit presse-agrumes (5) est situé dans ledit filtre (3)
**caractérisé en ce que**
- ledit filtre (3) est entraîné en rotation via une transmission de filtre reliée opérationnellement à ladite unité motrice (4) en entrée et audit filtre (3) en sortie;
- ledit presse-agrumes (5) est entraîné en rotation via une transmission de presse-agrumes reliée opérationnellement à ladite unité motrice (4) en entrée et audit presse-agrumes (5) en sortie, ladite transmission de filtre ayant un taux de transmission de filtre SR, défini comme étant un nombre de tours/minute (rpm) du filtre divisé par un nombre de tours/minute (rpm) du moteur, et ladite transmission de presse-agrumes ayant un taux de transmission de presse-agrumes CR, défini comme étant un nombre de tours/minute (rpm) du presse-agrumes divisé par un nombre de tours/minute (rpm) du moteur, et le taux SR/CR entre ledit taux de transmission de filtre SR et ledit taux de transmission de presse-agrumes CR est compris entre 5/1 et 30/1.

2. Appareil selon la revendication 1, dans lequel le taux SR/CR entre ledit taux de transmission de filtre SR et ledit taux de transmission de presse-agrumes CR est compris entre 10/1 et 20/1.

3. Appareil selon l'une des revendications 1 ou 2, dans lequel ledit filtre possède un diamètre interne de filtre Ri compris entre 10 cm et 30 cm, et de préférence entre 15 cm et 20 cm.

4. Appareil selon la revendication 3, dans lequel ledit filtre fonctionne de préférence à une vitesse de rotation comprise entre 1000 rpm et 2000 rpm.

5. Appareil selon l'une des revendications 1 à 4, dans lequel le diamètre des trous de perforation de ladite paroi latérale perforée est comprise entre 0.5 mm et 2mm, et de préférence entre 0.8 mm et 1.5 mm.

6. Appareil selon l'une des revendications 1 à 5, comprenant en outre un arbre de transmission relié opérationnellement à ladite unité motrice via ledit train de puissance de filtre prenant la forme d'un arbre de transmission, dans laquelle le fond dudit filtre comprend une forme de fond complémentaire à l'arbre de transmission, pour recevoir l'arbre de transmission de manière à être solidaire en rotation avec lui, et dans lequel ledit arbre de transmission et ledit fond peuvent être assemblés de manière amovible.

7. Appareil selon l'une des revendications 1 à 6, dans lequel ledit filtre comprend un fond et une paroi latérale perforée qui peuvent être assemblés de manière amovible.

8. Appareil selon la revendication 7, ledit fond et ladite paroi latérale perforée étant réalisés en un matériau polymère; ou ladite paroi latérale perforée comprenant une feuille perforée en acier inoxydable fixée à demeure dans un cadre en matériau polymère; ou ladite paroi latérale perforée étant en acier inoxydable; et ledit matériau polymère étant de préférence réalisée en un matériau thermoplastique.
